(19) Europäisches Patentamt
European Patent Office
Office européen des brevets

(11) EP 1 780 904 A1

(12) **EUROPEAN PATENT APPLICATION**

(43) Date of publication:
**02.05.2007 Bulletin 2007/18**

(51) Int Cl.:
***H04B 7/00*** *(2006.01)* ***H04L 12/56*** *(2006.01)*

(21) Application number: **06022308.8**

(22) Date of filing: **25.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **25.10.2005 JP 2005310402**

(71) Applicant: **NTT DoCoMo INC.**
**Chiyoda-ku**
**Tokyo 100-6150 (JP)**

(72) Inventors:
- **Usuda, Masafumi**
  **Chiyoda-ku**
  **Tokyo 100-1650 (JP)**
- **Nakamura, Takehiro**
  **Chiyoda-ku**
  **Tokyo 100-1650 (JP)**

(74) Representative: **HOFFMANN EITLE**
**Patent- und Rechtsanwälte**
**Arabellastrasse 4**
**81925 München (DE)**

(54) **Communication control using weighted average**

(57) A communication control apparatus includes: a weighted average processor configured to update an average value of measured values at predetermined timings by use of a weighted average process using a forgetting factor; a forgetting factor calculator configured to increase the forgetting factor gradually; and a communication controller configured to control communications based on the average value.

**FIG. 5**

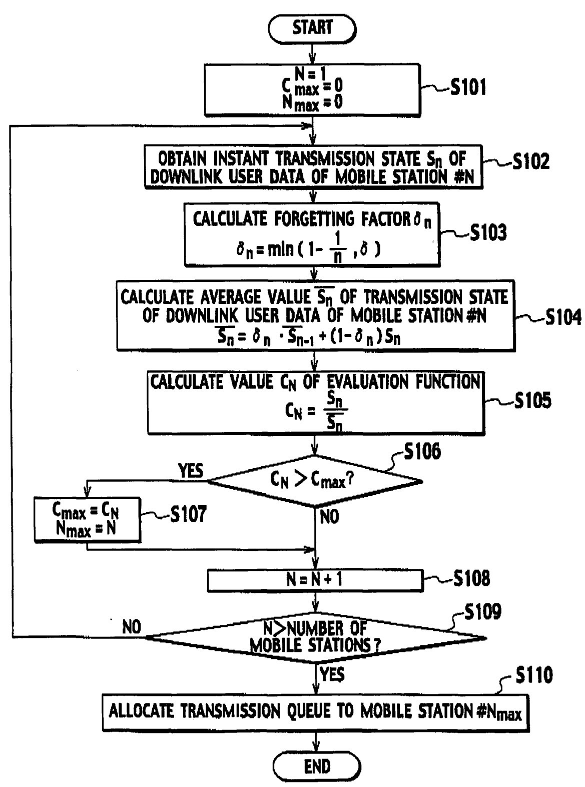


EP 1 780 904 A1

## Description

## CROSS REFERENCE TO RELATED APPLICATION

This application is based upon and claims the benefit of priority from the prior Japanese Patent Application No. P2005-310402, filed on October 25, 2005; the entire contents of which are incorporated herein by reference.

## BACKGROUND OF THE INVENTION

1. Field of the Invention

The present invention relates to a communication control apparatus and a communication control method, which control communications based on an average value of measured values.

2. Description of the Related Art

Conventionally, a communication control apparatus is configured to control communications based on an average value of predetermined measured values.
As a method of calculating an average value of measured values in such a communication control apparatus, "moving average process" and "weighted average process", are known.
The "moving average process" is a process for calculating an average value of measured values, by sliding an interval for calculating an average value.

Specifically, such a communication control apparatus is configured to calculate an average value $\overline{S_n}$ at timing n, by use of a moving average process, by using measured values $S_n$, $S_{n-1}$, $S_{n-2}$, $S_{n-3}$, ... and $S_{n-N+1}$ between the timing n and timing n-N+1 which precedes the timing n by certain intervals (by intervals corresponding to N measured values), in accordance with the following equation.

$$\overline{S_n} = \sum_{i=n-N+1}^{n} S_n$$

For example, when the number N of measured values equals five regarding measured values $S_1$, $S_2$, $S_3$, ..., such a communication control apparatus calculates an average value by use of a moving average process using the measured values $S_1$ to $S_5$ at timing 5 when $S_5$ is measured.
In this case, the apparatus calculates an average value by use of the moving average process using the measured values $S_2$ to $S_6$ at timing 6 when $S_6$ is measured.
In this case, the apparatus calculates an average value by use of the moving average process using the measured values $S_3$ to $S_7$ at timing 7 when $S_7$ is measured.

In such a moving average process, in a case where an average value $\overline{S_n}$ of measured values $S_n$ is calculated, N measured values need to be recorded. This causes a problem that a capacity of a recording device has to be large.
On the other hand, a weighted average process is a process for calculating an average value of measured values by use of a forgetting factor.
Specifically, by used of a weighted average process using a forgetting factor δ, such a communication control apparatus weights an average value $\overline{S_{n-1}}$ at timing n-1 and measured values $S_n$ at timing n, and calculates an average value $\overline{S_n}$ at timing n, in accordance with the following equation.

$$\overline{S_n} = \delta_n \cdot \overline{S_{n\ 1}} + (1 - \delta_n) S_n$$

It is to be noted that, in general, in such a communication control apparatus, a forgetting factor δ (0≤δ≤1) is set at a large value (a value slightly smaller than 1) to raise an effect of an average value $\overline{S_{n-1}}$ at timing n-1 on an average value $\overline{S_n}$ at timing n.

In a weighted average process, in a case where such a communication control apparatus calculates an average value $\overline{S_n}$ of measured values $S_n$, it suffices to record an average value $\overline{S_{n-1}}$, and there is no need to record N measured values unlike a moving average process. This makes it possible to reduce the capacity of the recording device.

However, in such a communication control apparatus, in a case where an average value $\overline{S_1}$ at a first timing n (n=1) is calculated by used of a weighted average process using the above-described forgetting factor δ, an initial value needs to be assigned to an average value $\overline{S_0}$ at timing n-1 (n-1=0). Nevertheless, there is a case where an inappropriate initial value is assigned to such an average value $\overline{S_0}$.

In such a case, when the forgetting factor δ (0 ≤ δ ≤1) is set at a large value (a value slightly smaller than 1) , an effect of the inappropriate value assigned to the average value $\overline{S_0}$ becomes high. Therefore, the possibility that an error is caused in an average value $\overline{S_1}$ becomes high.

Furthermore, there is also a case where an error of an average value $\overline{S_1}$ causes an error of an average value $\overline{S_n}$.

In particular, in a case where enough time has not passed since the first timing n (n=1), the effect of the inappropriate initial value assigned to an average value $\overline{S_0}$ becomes high. Therefore, there is a case where an average value $\overline{S_n}$ calculated by used of a weighted average process using a forgetting factor δ assumes a value largely different from an average value calculated by the above-described moving value process.

In such a case, the communication control apparatus has a problem that a communication control cannot be appropriately performed based on an average value $\overline{S_n}$ calculated by used of a weighted average process using a forgetting factor δ.

## BRIEF SUMMARY OF THE INVENTION

The present invention has been made in view of the forgoing. Accordingly, it is an object of the present invention to provide a communication control apparatus and a communication control method, which makes it possible to control communications with high accuracy based on an average value by reducing errors of the average value due to an inappropriate initial value by causing a forgetting factor to be gradually larger at the time of calculating the average value of measured values by used of a weighted average process using the forgetting factor.

A first aspect of the present invention is summarized as a communication control apparatus including: a weighted average processor configured to update an average value of measured values at predetermined timings by use of a weighted average process using a forgetting factor; a forgetting factor calculator configured to increase the forgetting factor gradually; and a communication controller configured to control communications based on the average value.

In the first aspect, the weighted average processor can be configured to update the average value $\overline{S_n}$ at timing n, in accordance with an equation $\overline{S_n} = \delta_n \cdot \overline{S_{n-1}} + (1 - \delta_n) S_n$, by use of the forgetting factor $\delta_n$ at timing n and the average value $\overline{S_{n-1}}$ at timing n-1.

In the first aspect, the forgetting factor calculator can be configured to increase the forgetting factor $\delta_n$ gradually at timing n, in accordance with an equation $\delta_n = \min\left(1 - \frac{1}{n}, \delta\right)$, up to a predetermined limit value δ.

In the first aspect, the communication control apparatus can be a radio base station configured to control transmission of downlink user data to mobile stations; the measured values cam be transmission states of the downlink user data to the mobile stations; the weighted average processor can be configured to update an average value of the transmission states at predetermined timings, by use of the weighted average process using the forgetting factor; and the communication controller can be configured to control the transmission of the downlink user data to the mobile stations, based on the average value of the transmission states.

In the first aspect, the communication control apparatus can be a radio base station configured to control call admission for mobile stations; the measured values can be maximum allowable transmission rates of uplink user data from the mobile stations; the weighted average processor can be configured to update an average value of the maximum allowable, transmission rates at predetermined timings, by use of the weighted average process using the forgetting factor; and the communication controller is configured to control call admission for the mobile stations, based on the average value of the maximum allowable transmission rates.

In the first aspect, the communication control apparatus can be a mobile station configured to control a transmission power of a downlink channel from a radio base station; the measured values can be reception signal powers and reception noise interference powers of the downlink channel in the mobile station; the weighted average processor can be configured to update an average value of the reception signal powers and an average value of the reception noise interference powers at predetermined timings by use of the weighted average using the forgetting factor; and the communication controller can be configured to control the transmission power of the downlink channel from the radio base station, based on a ratio between the average value of the reception signal powers and the average value of the reception noise interference powers.

A second aspect of the present invention is summarized as a communication control method including: updating, at a communication control apparatus, an average value of measured values at predetermined timings by use of a weighted average process using a forgetting factor; increasing, at the communication control apparatus, the forgetting factor gradually; and controlling, at the communication control apparatus, communications based on the average value.

In the second aspect, the average value $\overline{S_n}$ at timing n can be updated in accordance with an equation $\overline{S_n} = \delta_n \cdot \overline{S_{n-1}} + (1 - \delta_n) S_n$, by use of the forgetting factor $\delta_n$ at timing n and the average value $\overline{S_{n-1}}$ at timing n-1.

In the second aspect, the forgetting factor $\delta_n$ at timing n can be gradually increased in accordance with an equation $\delta_n = \min\left(1 - \frac{1}{n}, \delta\right)$, up to a predetermined limit value δ.

## BRIEF DESCRIPTION OF THE SEVERAL VIEWS OF THE DRAWINGS

FIG. 1 is a diagram showing a configurational example of a mobile communication system in which a communication control apparatus according to a first embodiment of the present invention is provided.

FIG. 2 is a schematic configurational example of the communication control apparatus (a radio base station) according to the first embodiment of the present invention.

FIG. 3 is a functional block diagram of a baseband signal process unit of the communication control apparatus (the radio base station) according to the first embodiment of the present invention.

FIG. 4 is a functional block diagram of an MAC-hs function unit in the baseband signal process unit of the communication control apparatus (the radio base station) according to the first embodiment of the present invention.

FIG. 5 is a flow chart showing an operational example of transmission control process of downlink user data of the communication control apparatus (the radio base station) according to the first embodiment of the present invention.

FIG. 6 is a functional block diagram of an MAC-e function unit in a baseband signal process unit of a communication control apparatus (a radio base station) according to a second embodiment of the present invention.

FIG. 7 is a flow chart showing an operational example of call admission process to a mobile station of the communication control apparatus (the radio base station) according to the second embodiment of the present invention.

FIG. 8 is a schematic configurational example of a communication control apparatus (a mobile station) according to a third embodiment of the present invention.

FIG. 9 is a functional block diagram of a baseband signal process unit of the communication control apparatus (the mobile station) according to the third embodiment of the present invention.

FIG. 10 is a functional block diagram of a layer 1 function unit in the baseband signal process unit of the communication control apparatus (the mobile station) according to the third embodiment of the present invention.

FIG. 11 is a flow chart showing an operational example of transmission control process of a downlink channel of the communication control apparatus (the mobile station) according to the third embodiment of the present invention.

## DETAILED DESCRIPTION OF THE INVENTION

[Communication Control Apparatus According to First Embodiment of Present Invention]

(Configuration of Communication Control Apparatus According to First Embodiment of Present Invention)

A configuration of a communication control apparatus according to a first embodiment of the present invention will be described below by referring to FIGS. 1 to 4.

FIG. 1 is a diagram showing a configurational example of a mobile communication system in which a communication control apparatus according to a first embodiment of the present invention is provided.

As shown in FIG. 1, the mobile communication system according to the first embodiment includes a radio base station 100, a mobile station 200, and a radio network controller 300.

Here, the radio network controller 300 may be connected with the radio base station 100 and a plurality of other radio base stations.

It is to be noted that the mobile station 200 may be plural, and in the first embodiment, as shown in FIG. 1, it is assumed that mobile stations #1 to #N are in communication with the mobile base station 100.

The mobile communication system according to the first embodiment is adaptable to "W-CDMA" and "CDMA2000" that are the third generation mobile communication systems. In addition, the mobile communication system according to the present embodiment employs HSDPA (High Speed Download Packet Access) .

Here, the HSDPA is a high-speed transmission method for packets, which uses a downlink shared channel (HS-SCCH (High Speed Shared Control Channel) or HS-DSCH (High Speed Download Shared Channel)), the downlink shared channel being used and shared by the mobile stations #1 to #N, and which uses associated dedicated channels (uplink and downlink bidirectional channels) that are respectively associated with physical channels individually allocated to the mobile stations #1 to #N.

In the mobile communication system according to the first embodiment, downlink user data are synonymous with downlink packets, and are configured to be transmitted at high speed through the downlink shared channel.

In the first embodiment of the present invention, an example will be described in which the above-described communication control apparatus is provided to the mobile base station 100.

FIG. 2 is a schematic configurational example of the radio base station 100 according to the first embodiment.

It is to be noted that the following configurations of the radio base station 100 are not necessarily independently present as hardware. That is, the individual configurations may be integrated, or may be configured by processes of software.

As shown in FIG. 2, the radio base station 100 is provided with an HWY interface 101, a baseband signal process unit 102, a transmission and reception unit 103, an amplifier unit 104, a transmission and reception antenna 105, and a call process control unit 106.

The HWY interface 101 is configured to receive downlink user data to be transmitted, from the radio network controller 300 that is positioned uplink of the radio base station 100, and to input the data to the baseband signal process unit 102.

In addition, the HWY interface 101 is configured to transmit uplink user data from the baseband signal process unit 102 to the radio network controller 300.

The baseband signal process unit 102 is configured to perform a retransmission control (HARQ: Hybrid ARQ) process, a scheduling process, a transmission format selection process, a channel encoding process, a spreading process and the like on the downlink user data, so that the baseband signals including such downlink user data are transmitted to the transmission and reception unit 103.

In addition, the baseband signal process unit 102 is configured to perform a de-spreading process, a RAKE synthetic process, an error correction decoding process and the like on the baseband signals from the baseband signal process unit 102, and then to transmit the thus obtained uplink user data to the HWY interface 101.

The transmission and reception unit 103 is configured to convert the baseband signals from the baseband signal process unit 102 to radio frequency band signals.

In addition, the transmission and reception unit 103 is configured to convert radio frequency band signals from the amplifier unit 104 to baseband signals.

The amplifier unit 104 is configured to amplify the radio frequency band signals from the transmission and reception unit 103, and to transmit the signals by use of the transmission and reception antenna 105.

In addition, the amplifier unit 104 is configured to amplify the signals received by the transmission and reception antenna 105, and to transmit the signals to the transmission and reception unit 103.

The call process control unit 106 is configured to perform transmission and reception of call process control signals with the radio network controller 300, and to perform processes such as management of a state of each function unit of the radio base station 100 and hardware resource allocation by a layer 3.

FIG. 3 is a functional block diagram of the baseband signal process unit 102. As shown in FIG. 3, the baseband signal process unit 102 is provided with a layer 1 function unit 111, an MAC-hs (Medium Access Control-HSDPA) function unit 112, and an MAC-e function unit 113.

It is to be noted that each of the layer 1 function unit 111 and the MAC-hs function unit 112 is connected with the call process control unit 106.

The layer 1 function unit 111 is configured to perform a channel encoding process, a spreading process and the like on the downlink user data and control information.

In addition, the layer 1 function unit 111 is configured to perform a de-spreading process, a RAKE synthetic process, an error correction decoding process and the like on the uplink user data and the control information.

In addition, the layer 1 function unit 111 is configured to receive a downlink SIR (Signal to Interference Ratio), a BLER (Block Error Rate), a CQI (Channel Quality Indicator) and the like transmitted from the mobile stations #1 to #N by an uplink dedicated DPCCH (Dedicated Physical Control Channel), and to output them to a weighted average process unit 160 of the MAC-hs function unit 112.

In addition, the layer 1 function unit 111 may be configured to output a transmission state of the downlink user data such as a transmission rate of the downlink user data transmitted to the mobile stations #1 to #N, a size (data volume) of the downlink user data whose delivery confirmation is received from the mobile stations #1 to #N, a size of the downlink user data transmitted to the mobile stations #1 to #N, and a size of transmittable downlink user data, to the weighted average process unit 160. The size of transmittable downlink user data is estimated based on the downlink SIR, BLER, CQI and the like.

The MAC-hs function unit 112 is configured to control transmission of the downlink user data, based on the HSDPA.

Specifically, the MAC-hs function unit 112 is configured to perform a retransmission control (HARQ) process on the downlink shared channel in the HSDPA, a scheduling process, a transport format process, a resource selection process and the like on the downlink user data waiting for transmission.

The MAC-e function unit 113 is configured to control uplink radio resources in an MAC sub-layer.

FIG. 4 is a functional block diagram of the MAC-hs function unit 112.

As shown in FIG. 4, the MAC-hs function unit 112 is provided with a flow control unit 120, an MAC-hs resource calculation unit 130, a scheduler unit 140, a TFR (Transport Format and Resource) selection unit 150, and a weighted average process unit 160.

The flow control unit 120 is configured of a plurality of flow controls (#1 to #N) $121_1$ to $121_N$, and is configured to adjust a transmission rate of the downlink user data received from the radio network controller 300 through the HWY interface 101, based on a capacity of a mounted transmission queue (buffer) and the like.

Each of the flow controls (#1 to #N) $121_1$ to $121_N$ is configured to monitor a distribution volume (flow) of the downlink user data.

when the distribution volume of the downlink user data increases, and free space of the transmission queue (buffer) decreases, a process is performed to suppress the volume of the downlink user data to be transmitted.

It is to be noted that the flow controls (#1 to #N) $121_1$ to $121_N$ respectively correspond to connections #1 to #N with the mobile stations #1 to #N.

The MAC-hs resource calculation unit 130 is to calculate radio resources (a power resource, a code resource, a hardware resource and the like) to be allocated to HS-DSCH.

The MAC-hs resource calculation unit 130 is provided with an HS-DSCH power resource calculation unit 131 configured to calculate the power resource, an HS-DSCH code resource calculation unit 132 configured to calculate the code resource, and a hardware resource calculation unit 133 configured to calculate the hardware resource.

The scheduler unit 140 is configured to perform a scheduling process on the downlink user data (control of a transmission order of the downlink user data) to be transmitted to the mobile stations #1 to #N.

Specifically, as will be described below, the scheduler unit 140 is configured to select a mobile station #N having a maximum value $C_{max}$ out of values $C_N$ of evaluation functions with regard to the mobile stations #1 to #N, and to allocates a priority queue 141 to the mobile station #N (to perform allocation of downlink shared channels). The value $C_N$ of the evaluation functions are calculated in the weighted average process unit 160.

As shown in FIG. 4, the scheduler unit 140 is provided with N priority queues (#1 to #N) $141_1$ to 141N, N reordering units (#1 to #N) $142_1$ to $142_N$, and N HARQ units (#1 to #N) $143_1$ and $143_N$.

It is to be noted that the priority queues (#1 to #N) $141_1$ to $141_N$, the reordering units (#1 to #N) $142_1$ to $142_N$, and the HARQ units (#1 to #N) $143_1$ to $143_N$ respectively correspond to the connections #1 to #N with the mobile stations #1 to #N.

The priority queues (#1 to #N) $141_1$ to $141_N$ are transmission queues provided in every connection. That is, the priority queues (#1 to #N) $141_1$ to $141_N$ are configured to store the downlink user data until getting selected by the scheduling process.

In general, one priority queue is used for one mobile station. However, in a case where a plurality of connections are set in one mobile station, a plurality of queues are used for one mobile station.

The reordering units (#1 to #N) $142_1$ to $142_N$ are configured to add sequence numbers to the downlink user data in order that the mobile stations #1 to #N can perform a reception order control process on the downlink user data in the retransmission control process using the HARQ, and to perform a window control process in order that the reception buffers of the mobile stations #1 to #N may not overflow.

The HARQ units (#1 to #N) $143_1$ to $143_N$ are configured to perform a retransmission control process on the downlink user data, based on an Ack/Nack feedback for the downlink user data in accordance with a stop-and-wait protocol ARQ.

A TFR selection unit 150 is configured of N TFR selection functions (#1 to #N) $151_1$ to $151_N$. It is to be noted that the TFR selection functions (#1 to #N) $151_1$ to $151_N$ respectively correspond to the connections #1 to #N with the mobile stations #1 to #N.

Each of the TFR selection functions (#1 to #N) $151_1$ to $151_N$ is configured to determine a downlink transport format (a code modulation method, a modulation multi-valued number, a coding ratio and the like) and a radio resource used in each of the connections #1 to #N, based on the CQI outputted from the layer 1 function unit 111, the radio resource (the power resource, the code resource and the hardware resource) and the like that should be allocated to HS-DSCH calculated in the MAC-hs resource calculation unit 130.

Each of the TFR selection functions (#1 to #N) $151_1$ to $151_N$ is configured to notify the layer 1 function unit 111 of the determined downlink transport format and radio resource.

As will be described below, the weighted average process unit 160 is configured to update, at predetermined timings, an average value of the transmission states of the downlink user data to the mobile stations #1 to #N, by use of a weighted average process using a forgetting factor.

In addition, as will be described below, the weighted average process unit 160 is configured to calculate a value $C_N$ of an evaluation function to be used in the scheduling process by the scheduler unit 140, based on the average value of the transmission states of the downlink user data to the mobile stations #1 to #N.

In addition, as will be described below, the weighted average process unit 160 is configured to increase a forgetting factor gradually.

The weighted average process unit 160 may be configured to increase the forgetting factor gradually at predetermined timings up to a predetermined limit value.

It is to be noted that the predetermined timings are, for example, timings for every TTI (Transmission Time Interval), timings for every TTI during which a value $C_N$ of an evaluation function used in the scheduling process is calculated, and for the like.

(Operation of Communication Control Apparatus According to First Embodiment of Present Invention)

By referring to FIG. 5, operations of the communication control apparatus according to the first embodiment of the present invention, specifically, operations of scheduling process of the downlink user data in the MAC-hs function unit 112 will be described.

As shown in FIG. 5, in Step S101, the weighted average process unit 160 performs an initial value assigning process for calculating values $C_N$ of evaluation functions with regard to the mobile stations #1 to #N.

Specifically, the weighted average process unit 160 assigns "N=1", "$C_{max}$=0", and "$N_{max}$=0" as initial values. Here, "N" represents a subscript of a mobile station, "$C_{max}$" represents a maximum value of values $C_N$ of evaluation functions, and "$N_{max}$" represents a subscript of a mobile station whose value $C_N$ of the evaluation function becomes the largest.

In Step S102, the weighted average process unit 160 obtains a transmission state $S_n$ of the downlink user data to the mobile station #N at timing n (that is, an instant transmission state of the downlink user data to the mobile station #N) from the layer 1 function unit 111.

Here, the transmission state $S_n$ of the downlink user data to the mobile station #N at timing n is a transmission rate of the downlink user data transmitted to the mobile station #N, a size (data volume) of the downlink user data whose delivery confirmation is received from the mobile station #N, a size of the downlink user data transmitted to the mobile station #N, a size of transmittable downlink user data, or the like, and is obtained from the layer 1 function unit 111. The size transmittable downlink user data is estimated based on the downlink SIR, BLER, CQI and the like.

In Step S103, the weighted average process unit 160 calculates a forgetting factor $\delta_n$ at timing n, in accordance with the following equation to increase the forgetting factor δ gradually, based on a convergent forgetting factor δ (a predetermined limit value).

$$\delta_n = \min\left(1-\frac{1}{n}, \delta\right)$$

In Step S104, the weighted average process unit 160 updates an average value $S_n$ of the transmission state of the downlink user data to the mobile station #N at timing n, in accordance with the following equation, by use of the transmission state $S_n$ obtained in Step S102 and the forgetting factor $\delta_n$ calculated in Step S103.

$$\overline{S_n} = \delta_n \cdot \overline{S_{n\,1}} + (1-\delta_n) S_n$$

Here, $\overline{S}_{n-1}$ is an average value of the transmission state of the downlink user data to the mobile station #N at timing n-1.

In Step S105, the weighted average process unit 160 calculates a value $C_N$ of an evaluation function to the mobile station #N, in accordance with the following equation by use of the transmission state $S_n$ obtained in Step S102 and the average value $\overline{S}_n$ updated in Step S104.

$$C_N = \frac{S_n}{\overline{S_n}}$$

In Step S106, the weighted average process unit 160 determines whether or not the value $C_N$ of the evaluation function calculated in Step S105 is larger than the maximum value $C_{max}$ of the evaluation function.

In a case where the value $C_N$ of the evaluation function is lager than the maximum value $C_{max}$ of the evaluation function (in the case of "YES" in Step S106), since $C_{max}$=0 (initial value) is currently assigned, the weighted average process unit 160 sets $C_N$ calculated in Step S105 at $C_{max}$, and sets the subscription N of the mobile station #N corresponding to $C_{max}$ to $N_{max}$ in Step S107.

In Step S108, the weighted average process unit 160 increments a value of N by +1, in order to calculate a value $C_{N+1}$ of an evaluation function of the next mobile station #N+1.

In Step S109, the weighted average process unit 160 determines whether or not the value of N is larger than the number of the mobile stations which are in communication with the radio base station 100.

In a case where the value of N is smaller than the number of the mobile stations which are in communication with the radio base station 100 (in the case of "NO" in Step S109), in this operation, a loop process from Step S102 to Step S108 is repeatedly performed until the value of N exceeds the number of the mobile stations which are in communication with the radio base station 100,

As a result of this, the weighted average process unit 160 can calculate values of evaluation functions with regard to all the mobile stations #1 to #N which are in communication with the radio base station 100.

On the other hand, in a case where the value of N is larger than the number of the mobile stations which are in communication with the radio base station 100 (in the case of "YES" in Step S109), this operation proceeds to step S110.

In Step S110, the weighted average process unit 160 instructs the scheduler unit 140 to perform allocation of the transmission queue to the mobile station #$N_{max}$ corresponding to the $N_{max}$ set in Step S107. The scheduler unit 140 performs the allocation of the transmission queue based on the instruction, and performs the scheduling process of the downlink user data.

(Action and Effect of Communication Control Apparatus According to First Embodiment of Present Invention)

In the case of the communication control apparatus according to the first embodiment of the present invention, at the time when the weighted average process unit 160 updates an average value of the transmission states of the downlink user data to the mobile stations by used of a weighted average process using a forgetting factor, the forgetting factor is gradually increased to reduce errors of the average value of the transmission state due to an inappropriate initial value. This makes it possible to perform transmission control of the downlink user data with high accuracy based on the average value of the transmission states.

In the case of the communication control apparatus according to the first embodiment of the present invention, it is possible to perform the transmission control of the downlink user data to the mobile stations with high accuracy. This makes it possible to effectively utilize downlink radio resources, and to improve downlink radio quality.

[Communication Control Apparatus According to Second Embodiment of Present Invention]

(Configuration of Communication Control Apparatus According to Second Embodiment of Present Invention)

With regard to a configuration of a communication control apparatus according to a second embodiment of the present invention, points different from the configuration and operation of the communication control apparatus according to the first embodiment will be mainly described below.

In addition, in the second embodiment, as in the case of the first embodiment, an example will be described in which the above-described communication control apparatus is provided to a radio base station 100.

It is to be noted that the following configurations of the radio base station 100 are not necessarily independently present as hardware. That is, the individual configurations may be integrated, or may be configured by processes of software.

In a mobile communication system in which the communication control apparatus according to the second embodiment is provided, employed is EUL (Enhanced Uplink) that is a method for controlling high speed uplink radio resources in a layer 1 and an MAC sub-layer (a layer 2) between the radio base station 100 and mobile stations 200, which have been discussed by the 3rd Generation Partnership Project (3GPP) and the 3rd Generation Partnership Project 2 (3GPP2) which are international standardization organizations of the third generation mobile communication systems.

Therefore, as shown in FIG. 2, in the radio base station 100 according to the second embodiment, a baseband signal process unit 102 is configured to be provided with an MAC-e function unit 113 in order to control the uplink radio resources in the MAC sub-layer.

In addition, the radio base station 100 according to the second embodiment is configured to transmit the uplink user data from the mobile stations #1 to #N to the MAC-e function unit 113 through an E-DPCH (Enhanced Dedicated Physical Channel) and an E-DHC (Enhanced Dedicated Physical Channel) which is mapped from the E-DPCH in a layer 1 function unit 111.

It is noted that the E-DPCH includes an E-DPDCH (Enhanced Dedicated Physical Data Channel) which transmits the uplink user data from the mobile stations #1 to #N, and an E-DPCCH (Enhanced Dedicated Physical Control Channel) which transmits control information from the mobile stations #1 to #N.

FIG. 6 is a functional block diagram of the MAC-e function unit 113.

As shown in FIG. 6, the MAC-e function unit 113 is provided with an HARQ process unit 113a, a reception process command unit 113b, a scheduling unit 113c, a demultiplex unit 113d, and a call admission control unit 113e.

The HARQ process unit 113a is configured to perform an HARQ process regarding the uplink user data by receiving the uplink user data and HARQ information received from the layer 1 function unit 111.

In addition, the HARQ process unit 113a is configured to notify the layer 1 function unit 111 of an ACK/NACK indicating a reception process result regarding the uplink user data. In addition, the HARQ process unit 113a is configured to notify the scheduling unit 113c of the ACK/NACK.

The reception process command unit 113b is configured to notify the layer 1 function unit 111 of a spreading rate multi-code number and an encoding rate with regard to a transport format of each specified mobile station, based on an E-TFCI (Enhanced Transport Combination Indicator) for every TTI received from the layer 1 function unit 111.

The scheduling unit 113c is configured to change a maximum allowable transmission rate of the uplink user data, based on the E-TFCI for every TTI received from the layer 1 function unit 111, the ACK/NACK received from the HARQ process unit 113a, and an interference level of an SIR, an INR or the like.

For example, the scheduling unit 113c may be configured to decrease the maximum allowable transmission rate of the uplink user data at a constant rate, in a case where the interference level increases to exceed a predetermined value.

In addition, the scheduling unit 113c may be configured to increase the maximum allowable transmission rate of the uplink user data at a constant rate, in a case where the interference level decreases to fall below a predetermined value.

Here, the maximum allowable transmission rate of the uplink user data may be common to all of the mobile stations #1 to #N which are in communication with the radio base station 100.

It is to be noted that the maximum allowable transmission rate of the uplink user data may be a transmission data block size (TBS) for transmitting the uplink user data, a transmission power of the E-DPDCH obtained from the layer 1 function unit 111, or a transmission power ratio between the E-DPDCH and the E-DPCCH (offset of transmission power) obtained from the layer 1 function unit 111.

It is to be noted that the scheduling unit 113c is configured to notify all of the mobile stations #1 to #N, which are in communication with the radio base station 100, of the maximum allowable transmission rate of the uplink user data as scheduling information through the layer 1 function unit 111.

In addition, the scheduling unit 113c may be configured to make notification of increase/decrease (UP/DOWN) of the maximum allowable transmission rate of the uplink user data as the scheduling information.

The demultiplex unit 113d is configured to perform a demultiplex process on the uplink user data received from the HARQ process unit 113a, and thereby transmitting the thus obtained uplink user data to the HWY interface 101.

The call admission control unit 113e is configured to update an average value of the maximum allowable transmission rates of the uplink user data at predetermined timings by use of a weighted average process using a forgetting factor.

The call admission control unit 113e is configured to obtain the maximum allowable transmission rate of the uplink user data from the scheduling unit 113c.

In addition, as will be described below, the call admission control unit 113e is configured to increase a forgetting factor gradually.

The call admission control unit 113e may be configured to increase the forgetting factor gradually at predetermined timings up to a predetermined limit value.

It is to be noted that the predetermined timings are, for example, timings for every TTI or the like.

In addition, as will be described below, in a case where a call admission request is made from a mobile station #N+1 which is not in communication with the radio base station 100, the call admission control unit 113e is configured to determine an average value of the above-described maximum allowable transmission rates of the uplink user data, and to control call admission for the mobile station #N+1.

For example, in a case where an average value of the above-described maximum allowable transmission rates of the user data is larger than a threshold value, the call admission control unit 113e may be configured to permit call admission of the mobile station #N+1.

In addition, in a case where an average of the above-described maximum allowable transmission rates of the uplink user data is not larger than the threshold value, the call admission control unit 113e may be configured to refuse the call admission of the mobile station #N+1.

(Operation of Communication Control Apparatus According to Second Embodiment of Present Invention)

By referring to FIG. 7, operations of the communication control apparatus according to the second embodiment, specifically, operations of the call admission control unit 113e to control call admission of the mobile station #N+1 which is not in communication with the radio base station 100, will be described.

AS shown in FIG. 7, in Step S201, the call admission control unit 113e obtains a maximum allowable transmission rate $S_n$ of the uplink user data at timing n (that is, an instant maximum allowable transmission rate of the uplink user data) from the scheduling unit 113c.

In Step S202, the call admission control unit 113e calculates a forgetting factor $\delta_n$ at timing n, in accordance with the following equation to gradually increase the forgetting factor $\delta$, based on a convergent forgetting factor $\delta$ (a predetermined limit value).

$$\delta_n = \min\left(1-\frac{1}{n},\delta\right)$$

In Step S203, the call admission control unit 113e updates an average value $\overline{S}_n$ of the maximum allowable transmission rates of the uplink user data at timing n, in accordance with the following equation by use of the maximum allowable transmission rate $S_n$ obtained in Step S201 and the forgetting factor $\delta_n$ calculated in Step S202

$$\overline{S_n} = \delta_n \cdot \overline{S_{n\,1}} + (1-\delta_n) S_n$$

Here, $\overline{S_{n-1}}$ is an average value of the maximum allowable transmission rates of the uplink user data at timing n-1.

In Step S204, in a case where a call admission request is made from the mobile station #N+1, this operation proceeds to Step S205.

In a case where a call admission request is not made from the mobile station #N+1, this operation returns to Step S201 to repeat Steps S201 to S204 at predetermined timings.

In Step S205, the call admission control unit 113e makes a determination on the average value $\overline{S_n}$ of the maximum allowable transmission rates updated in Step S203.

In a case where the average value $\overline{S_n}$ of the maximum allowable transmission rates updated in Step S203 is larger than a threshold value (in the case of "YES" in Step S205) , the call admission control unit 113e permits call admission of the mobile station #N+1 in Step S206.

In a case where the average value $\overline{S_n}$ of the maximum allowable transmission rates updated in Step S203 is not larger than the threshold (in the case of "NO" in Step S205), the call admission control unit 113e refuses the call admission of the mobile station #N+1 in Step S207.

(Action and Effect of Communication Control Apparatus According to Second Embodiment)

According to the communication control apparatus according to the second embodiment of the present invention, at the time when the call admission control unit 113e updates an average value of the maximum allowable transmission rates of the uplink user data by used of a weighted average process using a forgetting factor, the forgetting factor is gradually increased to reduce errors of the average value of the maximum allowable transmission rates due to an inappropriate initial value. This makes it possible to control call admission of the mobile stations with high accuracy, based on the average value of the maximum allowable transmission rates.

According to the communication control apparatus according to the second embodiment of the present invention, since it is possible to control the call admission of the mobile stations with high accuracy, it is possible to effectively utilize uplink radio resources, and to improve uplink radio quality.

[Communication Control Apparatus According to Third Embodiment of Present Invention]

(Configuration of Communication Control Apparatus According to Third Embodiment of Present Invention)

With regard to a configuration of a communication control apparatus according to a third embodiment of the present invention, points different from the configuration and operation of the mobile communication system set in the communication control apparatus according to the above-described first and second embodiments will be mainly described below.

In addition, in a mobile communication system according to the third embodiment, transmission power control of downlink channel by use of a closed loop is employed.

It is to be noted that in the third embodiment of the present invention, an example in which the above-described communication control apparatus is provided to a mobile station 200 will be described.

FIG. 8 is a diagram showing a schematic configurational example of the mobile station 200 according to the third embodiment.

It is to be noted that the following configurations of the mobile station 200 are not necessarily independently present as hardware. That is, the individual configurations may be integrated, or may be configured by processes of software.

As shown in FIG. 8, the mobile station 200 is provided with a bus interface unit 201, a call process control unit 202, a baseband signal process unit 203, a transmission and reception unit 204, and a transmission and reception antenna 205. In addition, the mobile station 200 may be configured to be provided with an amplifier unit (not shown).

The call process control unit 202 is connected with the bus interface unit 201 and the baseband signal process unit 203. The call process control unit 202 is configured to perform state management of each function unit, and the like.

As shown in FIG. 9, the baseband signal process unit 203 is provided with an upper layer function unit 211, an RLC function unit 212 configured to function as an RLC sub-layer, an MAC-d function unit 213, an MAC-e function unit 214, and a layer 1 function unit 215 configured to function as a layer 1.

The transmission and reception unit 204 is configured to convert baseband signals from the baseband signal process unit 203 to radio frequency band signals.

In addition, the transmission and reception unit 204 is configured to convert radio frequency band signals from the transmission and reception antenna 205 to baseband signals.

FIG. 10 is a functional block diagram of the layer 1 function unit 215 of the baseband signal process unit 203.

As shown in FIG. 10, the layer 1 function unit 215 is provided with a physical channel reception unit 215a, a transmission channel decoder unit 215b, an SINR measurement unit 215c, an SINR comparison unit 215d, a transmission channel encoder unit 215e, and a physical channel transmission unit 215f.

The physical channel reception unit 215a is configured to receive downlink user data and control information from the radio base station 100 through a physical channel such as a CPICH (Common Pilot Channel) or a DPCH (Dedicated Physical Channel), and to perform de-spreading process and the like to output reception signals.

Here, a DPCH is an uplink and downlink bidirectional channel, and includes a DPDCH (Dedicated Physical Data Channel) for transmitting user data, and a DPDCH (Dedicated Physical Control Channel) for transmitting control information.

The transmission channel decoder unit 215b is configured to perform a RAKE synthesis process, an error correction decoding process and the like, based on the reception signals outputted from the physical channel reception unit 215a, and to transmit the downlink user data to the MAC-e function unit 214.

The SINR measurement unit 215c is configured to measure a SINR (signal to interference-plus-noise ratio) based on the reception signals of the downlink channel, the reception signals being outputted from the physical channel reception unit 215a.

Specifically, the SINR measurement unit 215c is configured to obtain reception signal powers and reception noise interference powers of the CPICH, based on the reception signals of CPICH, the reception signals being outputted from the physical channel reception unit 215a.

In addition, the SINR measurement unit 215c is configured to update an average value of the reception signal powers and an average value of the reception noise interference powers of the CPICH at predetermined timings, by use of a weighted average process using a forgetting factor.

In addition, the SINR measurement unit 215c is configured to measure an SINR that is a ratio between the updated average value of the reception signal powers and the updated average value of the reception noise interference powers of the CPICH.

In addition, the SINR measurement unit 215c may be configured to measure SINR, based on dedicated pilot signals included in the DPCCH.

In addition, as will be described below, the SINR measurement unit 215c is configured to increase a forgetting factor gradually.

The SINR measurement unit 215c may be configured to increase the forgetting factor gradually at predetermined timings up to a predetermined limit value.

It is to be noted that the predetermined timings are, for example, timings for every TTI or the like.

The SINR comparison unit 215d is configured to perform transmission power control of the downlink channel from the radio base station 100, based on an SINR.

Specifically, the SINR comparison unit 215d is configured to compare the SINR measured by the SINR measurement unit 215c with a target SINR, and to output a transmission power control bit, based on the comparison result.

Here, the target SINR is a target value of SINR, which is determined based on an error rate or the like in the error correction decoding process in order to secure reception quality.

For example, in a case where the SINR calculated by the SINR measurement unit 215c is lower than the target SINR, the SINR comparison unit 215d may output a transmission power control bit instructing increase (UP) of the transmission power of the downlink channel.

The transmission channel encoder unit 215e is configured to perform an error correction encoding process, a transmission rate matching process and the like on the uplink user data and the control information.
The physical channel transmission unit 215f is configured to perform a spreading process or the like on the uplink user data and the control information, and to transmit them through the physical channel.
In addition, the physical channel transmission unit 215f is configured to transmit the transmission power control bit by use of the DPCCH to the radio base station 100.

(Operation of Communication Control Apparatus According to Third Embodiment of Present Invention)

By referring to FIG. 11, operations of the communication device according to the third embodiment of the present invention, specifically, operations in which the mobile station 200 performs transmission power control of the downlink channel from the radio base station 100 will be described.
As shown in FIG. 11, in Step S301, the SINR measurement unit 215c obtains the reception signal outputted from the physical channel reception unit 215a.
In Step S302, the SINR measurement unit 215a obtains a reception signal power $S1_n$ at timing n (that is, an instant reception signal power) based on the reception signal obtained in Step S301.
In Step S303, the SINR measurement unit 215c calculates a forgetting factor $\delta\, l_n$ at timing n, based on a convergent forgetting factor $\delta$ l (a predetermined limit value), in accordance with the following equation to increase the forgetting factor $\delta$ l gradually.

$$\delta 1_n = \min\left(1-\frac{1}{n}, \delta 1\right)$$

In Step S304, the SINR measurement unit 215c updates the average value $\overline{S1_n}$ of the reception signal powers at timing n, in accordance with the following equation by use of the reception signal power $S1_n$ obtained in Step S302 and the forgetting factor $\delta 1_n$ calculated in Step S303.

$$\overline{S1_n} = \delta 1_n \cdot \overline{S1_{n-1}} + (1-\delta 1_n) S1_n$$

Here, $\overline{S1_{n-1}}$ is an average value of the reception signal powers at timing n-1.

In Steps S305 to S307, as in the case of Steps S302 to S304, an average value $\overline{S2_n}$ of the reception noise interference powers at timing n (that is, instant reception noise interference power) is updated.
In Step S308, the SINR measurement unit 215c updates SINR in accordance with the following equation.

$$SINR = \frac{\overline{S1_n}}{\overline{S2_n}}$$

In Step S309, the SINR comparison unit 215d determines whether or not the SINR updated in Step S308 is larger than a target SINR.
In a case where the SINR is larger than the target SINR (in the case of "YES" in Step S309), the SINR comparison unit 215d outputs a transmission power control bit to decrease the transmission power of the downlink channel in Step S310.
In a case where the SINR is the target SINR and less (in the case of "NO" in Step S309), the SINR comparison unit 215d outputs a transmission power control bit to increase the transmission power of the downlink channel in Step S311.

(Action and Effect of Communication Control Apparatus According to Third Embodiment of Present Invention)

In the case of the communication control apparatus according to the third embodiment of the present invention, at the time when the SINR measurement unit 215c updates an average value of the reception signal powers and an average value of the reception noise interference powers by use of a weighted average process using a forgetting factor, the forgetting factor is gradually increased, thereby reducing errors of the average value of the reception signal powers and errors of the average value of the reception noise interference powers, the errors being due to an inappropriate initial value.

This makes it possible to control transmission power of the downlink channel from the radio base station with high accuracy, based on a ratio between the average value of the reception signal powers and the average value of the reception noise interference powers.

In the case of the communication control apparatus according to the third embodiment of the present invention, since it is possible to control the transmission power of the downlink channel from the radio base station with high accuracy, it is possible to effectively utilize downlink resources, and to improve downlink radio quality.

(Modified Example)

The communication control apparatus according to the third embodiment of the present invention may be configured to update an average value of the reception signal powers and an average value of the reception interference powers, and to control the transmission power of the downlink channel based on an SIR that is a ratio between the average value of the reception signal powers and the average value of the reception interference powers.

(Other Embodiments)

The present invention has been described by use of the above-described embodiments. However, it should not be understood that the description and drawings constituting a part of this disclosure limit the present invention. Various alternative embodiments, examples and operational technologies will be obvious to those skilled in the art from this disclosure.

For example, the communication control apparatus according to the present invention can be installed in a radio network controller.

**Claims**

1. A communication control apparatus, comprising:

   a weighted average processor configured to update an average value of measured values at predetermined timings by use of a weighted average process using a forgetting factor;
   a forgetting factor calculator configured to increase the forgetting factor gradually; and
   a communication controller configured to control communications based on the average value.

2. The communication control apparatus as set forth in claim 1, wherein

   the weighted average processor is configured to update the average value $\overline{S_n}$ at timing n, in accordance with an equation $\overline{S_n} = \delta_n \cdot \overline{S_{n\ 1}} + (1-\delta_n) S_n$, by use of the forgetting factor $\delta_n$ at timing n and the average value $\overline{S_{n-1}}$ at timing n-1.

3. The communication control apparatus as set forth in claim 1, wherein
   the forgetting factor calculator is configured to increase the forgetting factor $\delta_n$ gradually at timing n, in accordance with an equation $\delta_n = \min\left(1-\frac{1}{n}, \delta\right)$, up to a predetermined limit value $\delta$.

**4.** The communication control apparatus as set forth in claim 1, wherein
the communication control apparatus is a radio base station configured to control transmission of downlink user data to mobile stations;
the measured values are transmission states of the downlink user data to the mobile stations;
the weighted average processor is configured to update an average value of the transmission states at predetermined timings, by use of the weighted average process using the forgetting factor; and
the communication controller is configured to control the transmission of the downlink user data to the mobile stations, based on the average value of the transmission states.

**5.** The communication control apparatus as set forth in claim 1, wherein
the communication control apparatus is a radio base station configured to control call admission for mobile stations;
the measured values are maximum allowable transmission rates of uplink user data from the mobile stations;
the weighted average processor is configured to update an average value of the maximum allowable transmission rates at predetermined timings, by use of the weighted average process using the forgetting factor; and
the communication controller is configured to control call admission for the mobile stations, based on the average value of the maximum allowable transmission rates.

**6.** The communication control apparatus as set forth in claim 1, wherein
the communication control apparatus is a mobile station configured to control a transmission power of a downlink channel from a radio base station,
the measured values are reception signal powers and reception noise interference powers of the downlink channel in the mobile station;
the weighted average processor is configured to update an average value of the reception signal powers and an average value of the reception noise interference powers at predetermined timings by use of the weighted average using the forgetting factor; and
the communication controller is configured to control the transmission power of the downlink channel from the radio base station, based on a ratio between the average value of the reception signal powers and the average value of the reception noise interference powers.

**7.** A communication control method, comprising:

updating, at a communication control apparatus, an average value of measured values at predetermined timings by use of a weighted average process using a forgetting factor;
increasing, at the communication control apparatus, the forgetting factor gradually; and
controlling, at the communication control apparatus, communications based on the average value.

**8.** The communication control method as set forth in claim 7, wherein

the average value $\overline{S_n}$ at timing n is updated in accordance with an equation

$\overline{S_n} = \delta_n \cdot \overline{S_{n1}} + (1 - \delta_n) S_n$, by use of the forgetting factor $\delta_n$ at timing n and the average value $\overline{S_{n-1}}$ at timing n-1.

**9.** The communication control method as set forth in claim 7, wherein
the forgetting factor $\delta_n$ at timing n is gradually increased in accordance with an equation

$\delta_n = \min\left(1 - \frac{1}{n}, \delta\right)$, up to a predetermined limit value δ.

FIG. 1

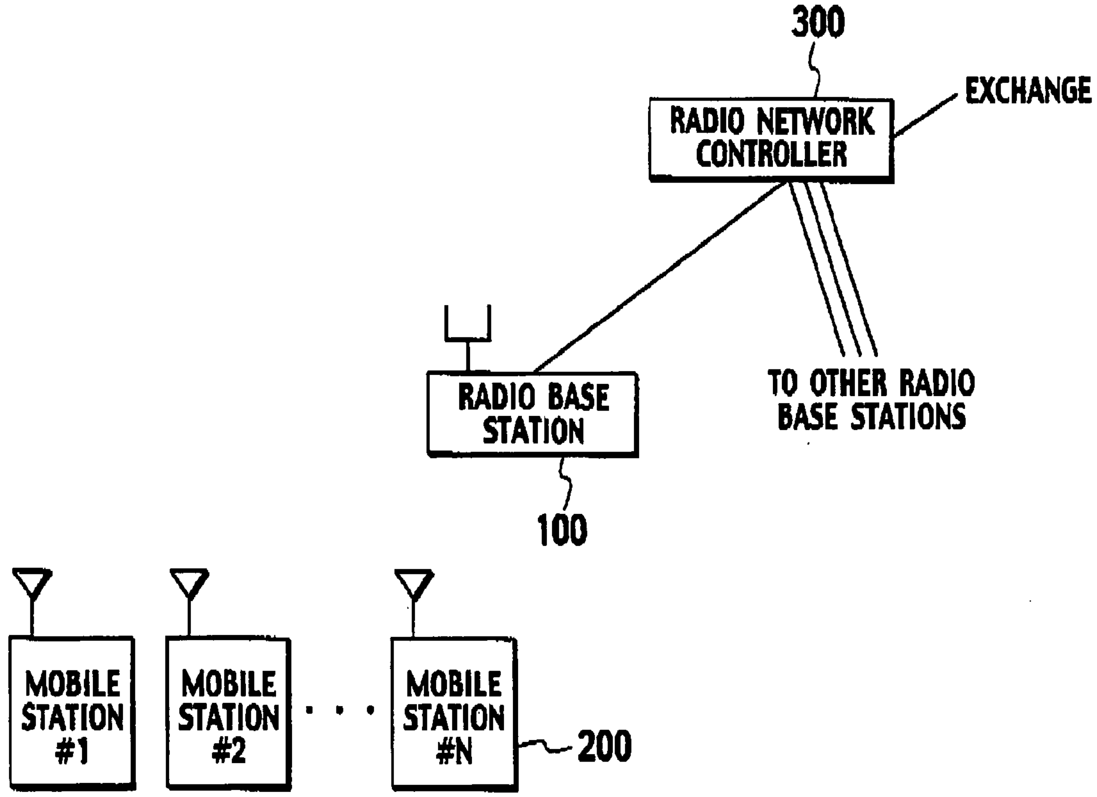
300
RADIO NETWORK CONTROLLER
EXCHANGE
RADIO BASE STATION
TO OTHER RADIO BASE STATIONS
100
MOBILE STATION #1
MOBILE STATION #2
MOBILE STATION #N
200

FIG. 2

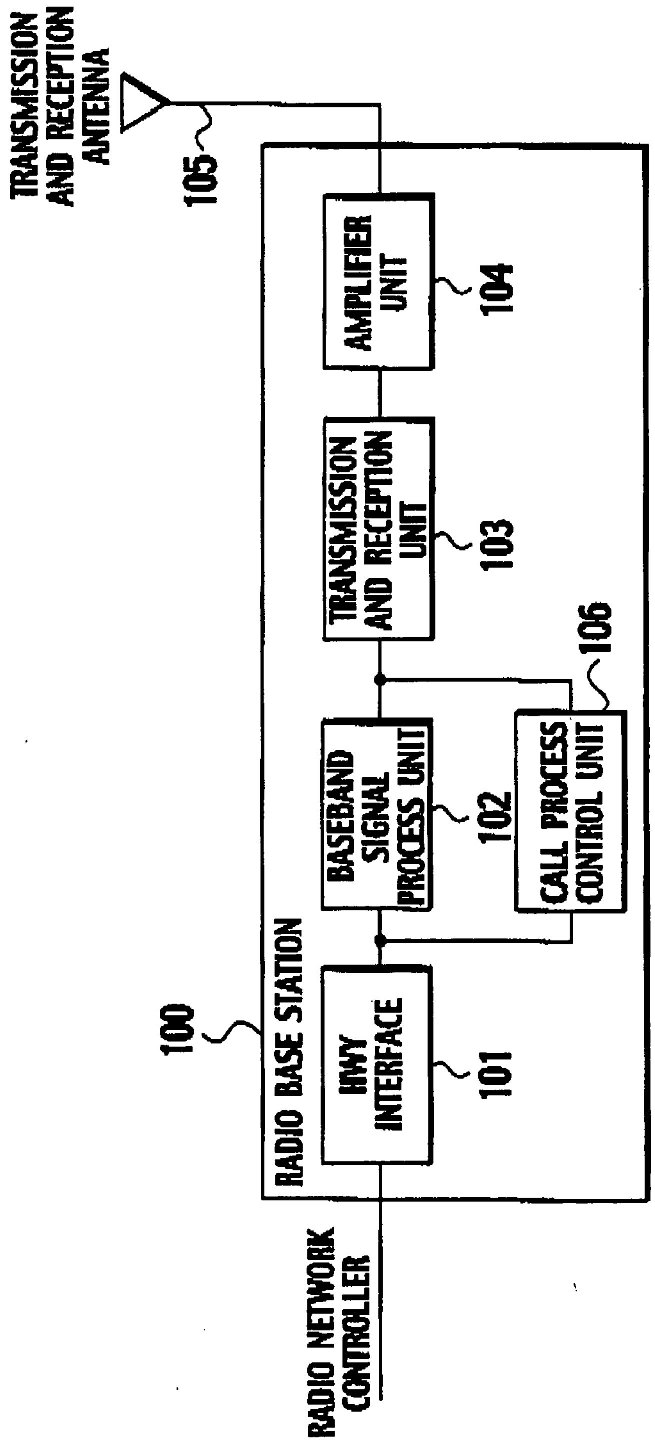
TRANSMISSION AND RECEPTION ANTENNA
105
RADIO BASE STATION
100
HWY INTERFACE
101
BASEBAND SIGNAL PROCESS UNIT
102
TRANSMISSION AND RECEPTION UNIT
103
AMPLIFIER UNIT
104
CALL PROCESS CONTROL UNIT
106
RADIO NETWORK CONTROLLER

FIG. 3

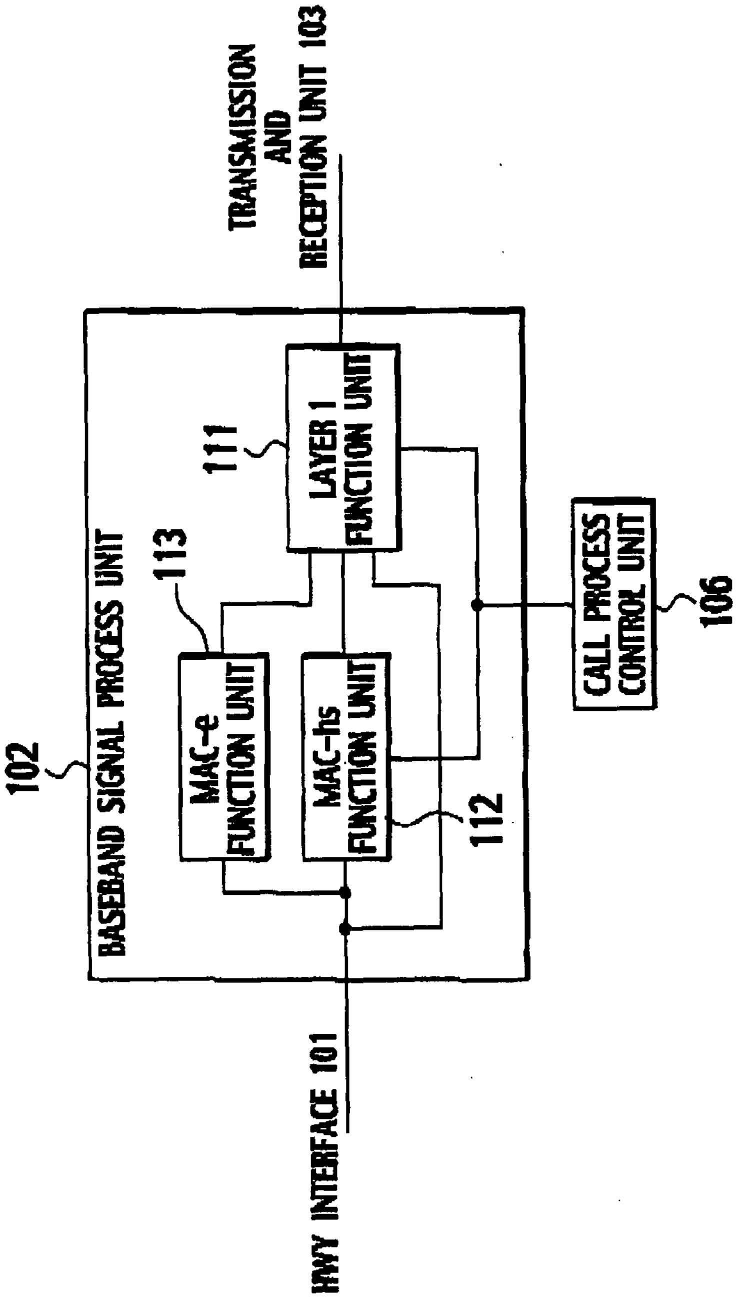
TRANSMISSION AND RECEPTION UNIT 103
BASEBAND SIGNAL PROCESS UNIT
102
113
111
LAYER 1 FUNCTION UNIT
MAC-e FUNCTION UNIT
MAC-hs FUNCTION UNIT
112
CALL PROCESS CONTROL UNIT
106
HWY INTERFACE 101

FIG. 4

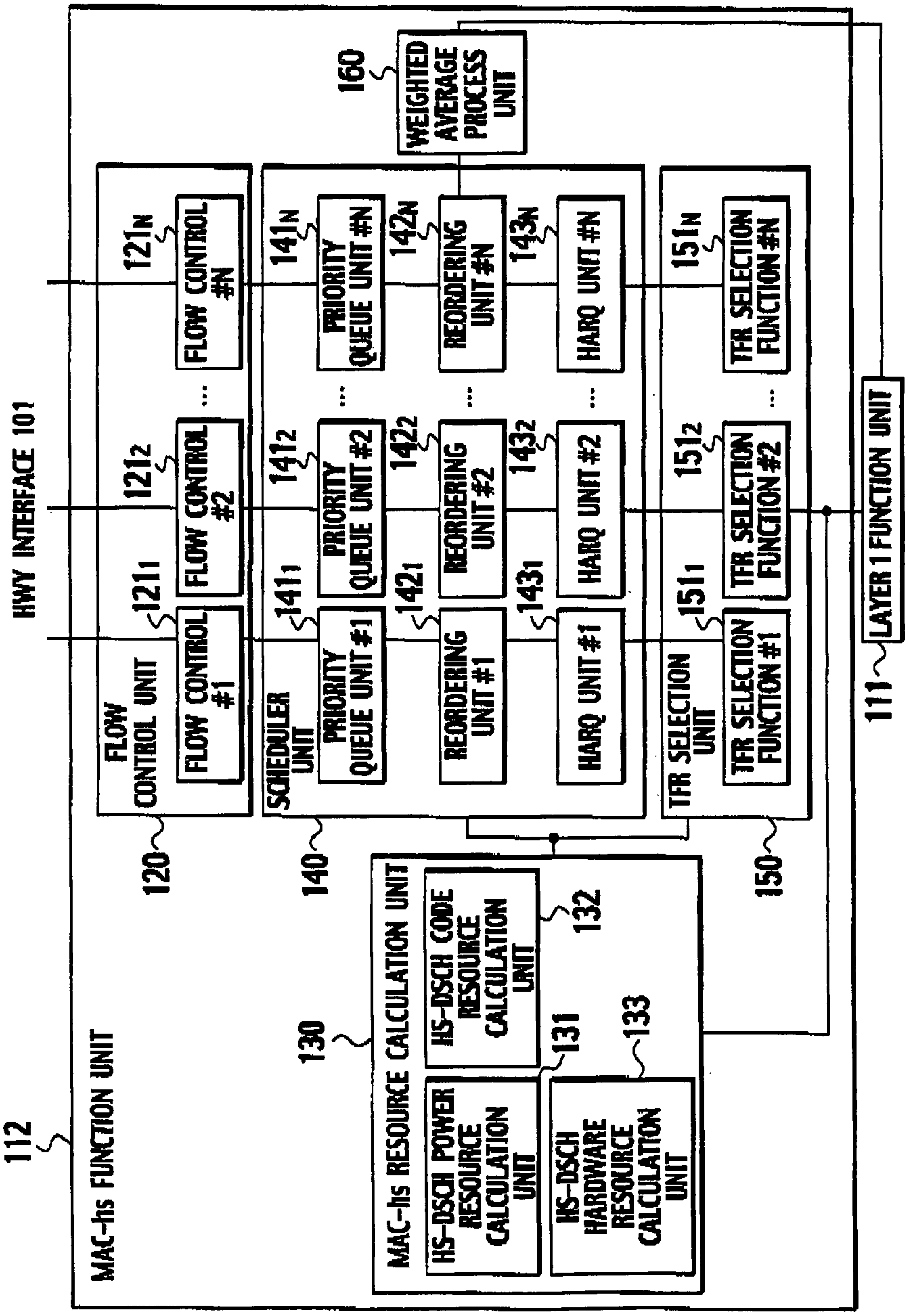

HWY INTERFACE 101
112
MAC-hs FUNCTION UNIT
120
FLOW CONTROL UNIT
FLOW CONTROL #1
121₁
FLOW CONTROL #2
121₂
FLOW CONTROL #N
121N
140
SCHEDULER UNIT
PRIORITY QUEUE UNIT #1
141₁
PRIORITY QUEUE UNIT #2
141₂
PRIORITY QUEUE UNIT #N
141N
REORDERING UNIT #1
142₁
REORDERING UNIT #2
142₂
REORDERING UNIT #N
142N
HARQ UNIT #1
143₁
HARQ UNIT #2
143₂
HARQ UNIT #N
143N
150
TFR SELECTION UNIT
TFR SELECTION FUNCTION #1
151₁
TFR SELECTION FUNCTION #2
151₂
TFR SELECTION FUNCTION #N
151N
160
WEIGHTED AVERAGE PROCESS UNIT
130
MAC-hs RESOURCE CALCULATION UNIT
HS-DSCH POWER RESOURCE CALCULATION UNIT
131
HS-DSCH CODE RESOURCE CALCULATION UNIT
132
HS-DSCH HARDWARE RESOURCE CALCULATION UNIT
133
111
LAYER 1 FUNCTION UNIT

FIG. 5

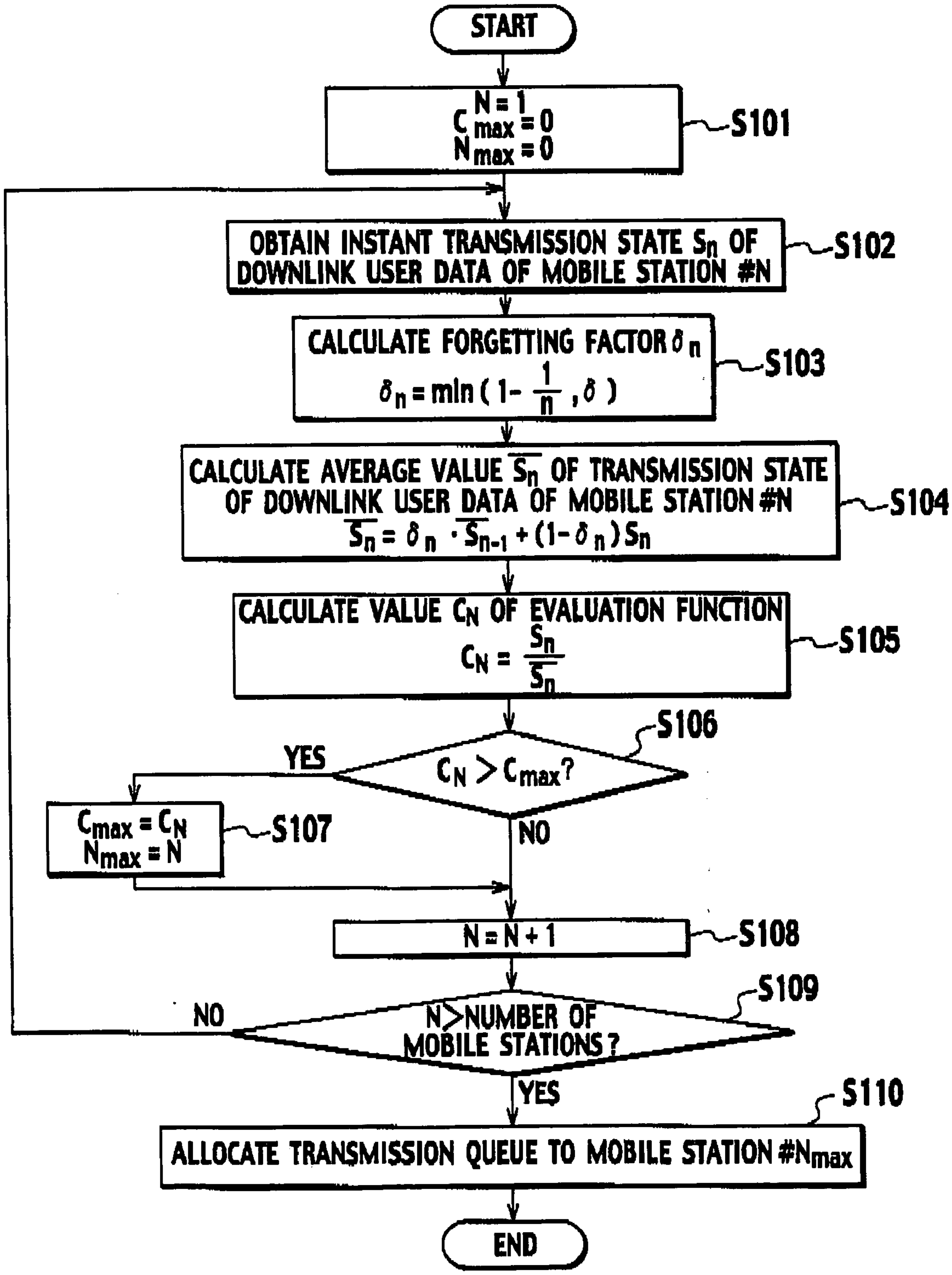
START
N = 1
C max = 0
N max = 0
S101
OBTAIN INSTANT TRANSMISSION STATE Sn OF DOWNLINK USER DATA OF MOBILE STATION #N
S102
CALCULATE FORGETTING FACTOR δn
δn = min ( 1- 1/n , δ )
S103
CALCULATE AVERAGE VALUE S̄n OF TRANSMISSION STATE OF DOWNLINK USER DATA OF MOBILE STATION #N
S̄n = δn · S̄n-1 + (1- δn) Sn
S104
CALCULATE VALUE CN OF EVALUATION FUNCTION
CN = Sn / S̄n
S105
CN > Cmax?
S106
YES
NO
Cmax = CN
Nmax = N
S107
N = N + 1
S108
N>NUMBER OF MOBILE STATIONS?
S109
NO
YES
ALLOCATE TRANSMISSION QUEUE TO MOBILE STATION #Nmax
S110
END

FIG. 6

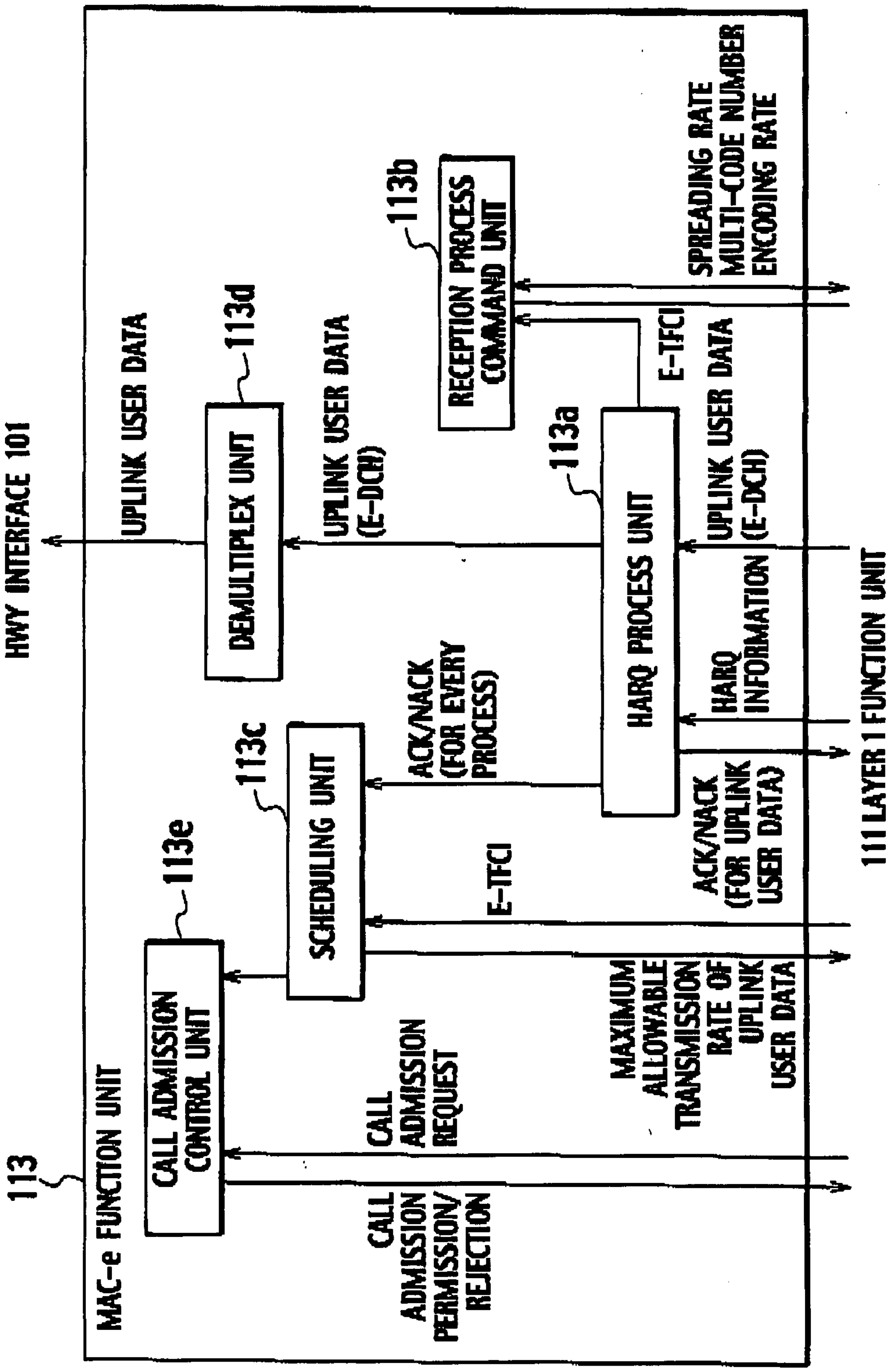
HWY INTERFACE 101
UPLINK USER DATA
113d
DEMULTIPLEX UNIT
UPLINK USER DATA
(E-DCH)
113b
RECEPTION PROCESS
COMMAND UNIT
E-TFCI
UPLINK USER DATA
113a
HARQ PROCESS UNIT
UPLINK USER DATA
(E-DCH)
HARQ
INFORMATION
SPREADING RATE
MULTI-CODE NUMBER
ENCODING RATE
113c
SCHEDULING UNIT
ACK/NACK
(FOR EVERY
PROCESS)
ACK/NACK
(FOR UPLINK
USER DATA)
111 LAYER 1 FUNCTION UNIT
E-TFCI
113e
CALL ADMISSION
CONTROL UNIT
113
MAC-e FUNCTION UNIT
CALL
ADMISSION
REQUEST
CALL
ADMISSION
PERMISSION/
REJECTION
MAXIMUM
ALLOWABLE
TRANSMISSION
RATE OF
UPLINK
USER DATA

FIG. 7

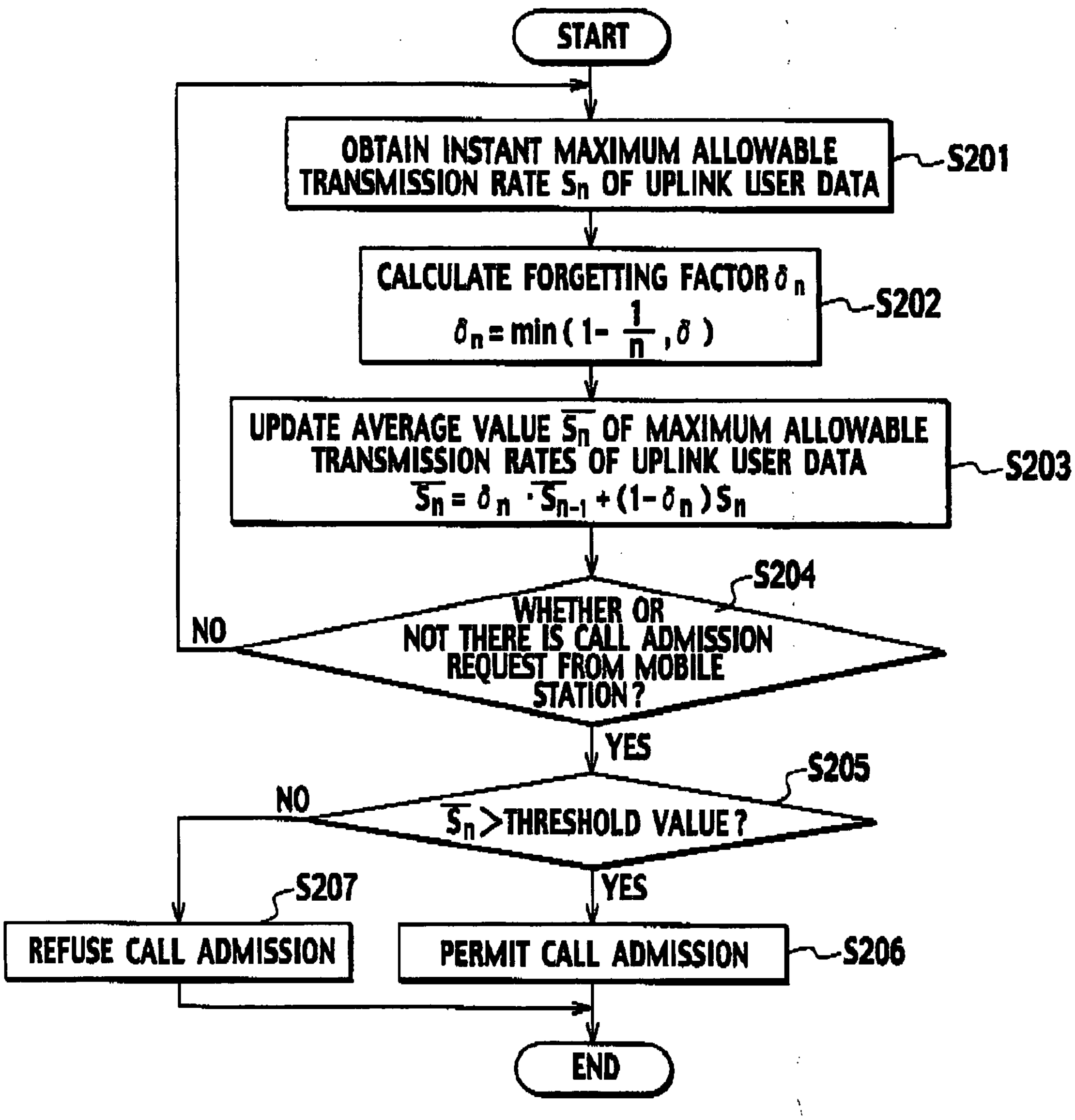
START
OBTAIN INSTANT MAXIMUM ALLOWABLE TRANSMISSION RATE $S_n$ OF UPLINK USER DATA
S201
CALCULATE FORGETTING FACTOR $\delta_n$
$\delta_n = \min(1 - \frac{1}{n}, \delta)$
S202
UPDATE AVERAGE VALUE $\overline{S_n}$ OF MAXIMUM ALLOWABLE TRANSMISSION RATES OF UPLINK USER DATA
$\overline{S_n} = \delta_n \cdot \overline{S_{n-1}} + (1 - \delta_n) S_n$
S203
WHETHER OR NOT THERE IS CALL ADMISSION REQUEST FROM MOBILE STATION?
S204
NO
YES
$\overline{S_n}$ >THRESHOLD VALUE?
S205
NO
YES
REFUSE CALL ADMISSION
S207
PERMIT CALL ADMISSION
S206
END

FIG. 8

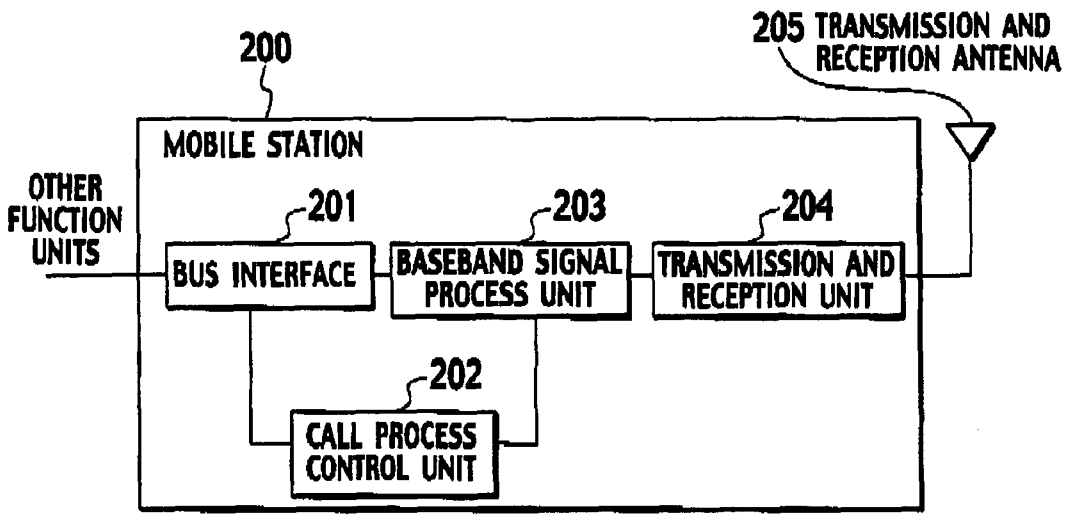
200
205 TRANSMISSION AND RECEPTION ANTENNA
MOBILE STATION
OTHER FUNCTION UNITS
201
203
204
BUS INTERFACE
BASEBAND SIGNAL PROCESS UNIT
TRANSMISSION AND RECEPTION UNIT
202
CALL PROCESS CONTROL UNIT

FIG. 9

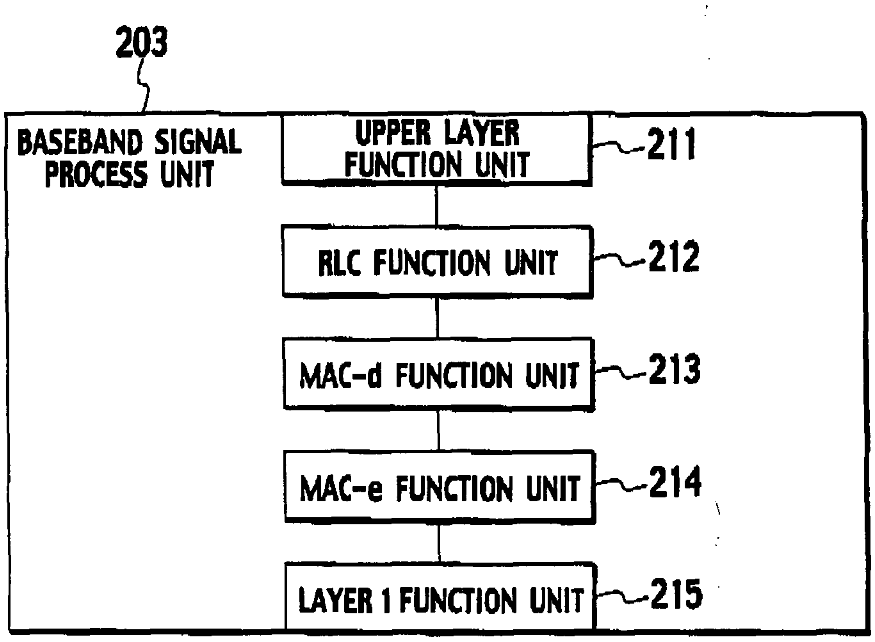
203
BASEBAND SIGNAL PROCESS UNIT
UPPER LAYER FUNCTION UNIT
211
RLC FUNCTION UNIT
212
MAC-d FUNCTION UNIT
213
MAC-e FUNCTION UNIT
214
LAYER 1 FUNCTION UNIT
215

FIG. 10

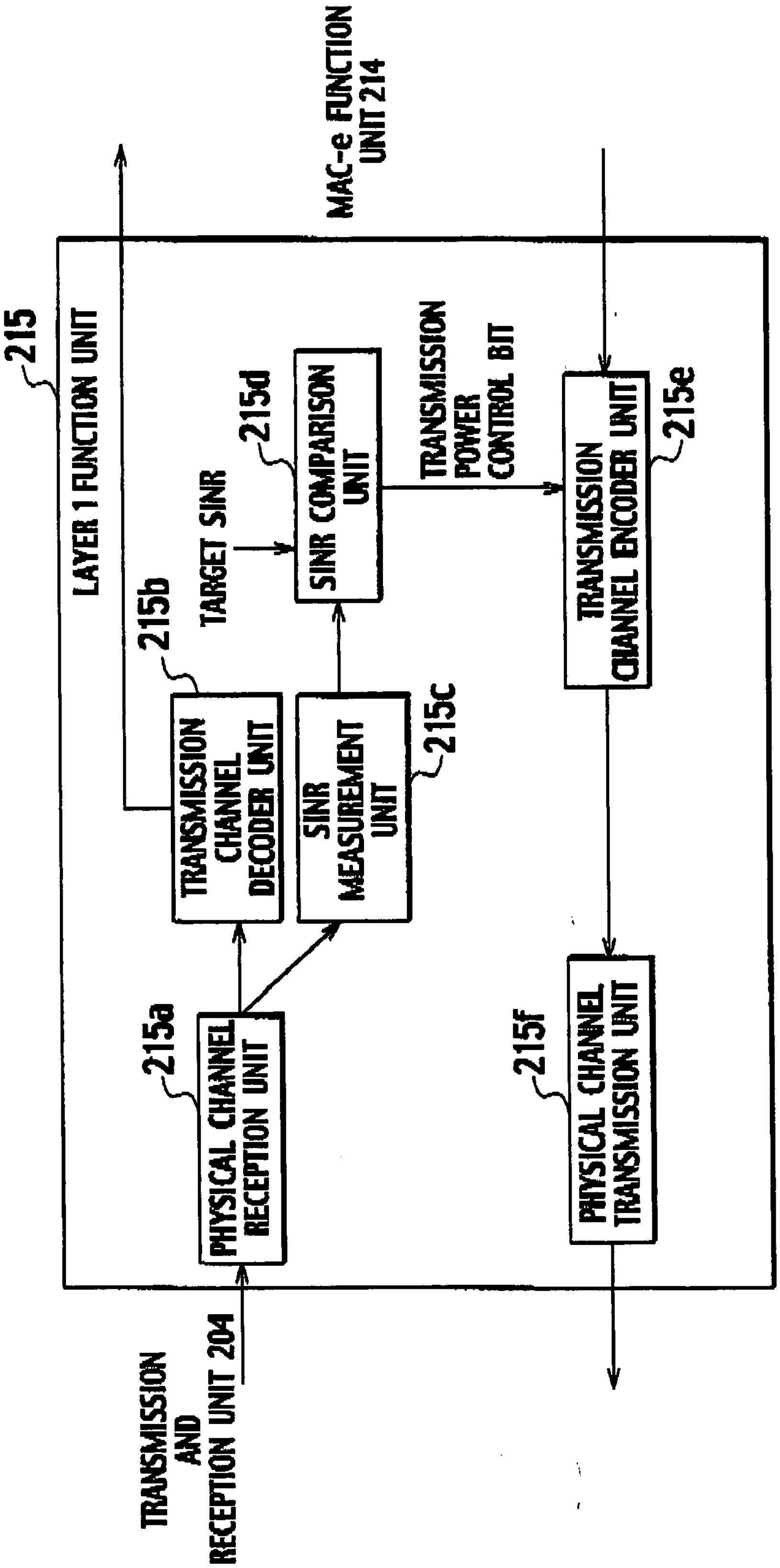
MAC-e FUNCTION UNIT 214
215
LAYER 1 FUNCTION UNIT
215b
TARGET SINR
215d
SINR COMPARISON UNIT
TRANSMISSION POWER CONTROL BIT
TRANSMISSION CHANNEL ENCODER UNIT
215e
TRANSMISSION CHANNEL DECODER UNIT
SINR MEASUREMENT UNIT
215c
215a
PHYSICAL CHANNEL RECEPTION UNIT
215f
PHYSICAL CHANNEL TRANSMISSION UNIT
TRANSMISSION AND RECEPTION UNIT 204

# FIG. 11

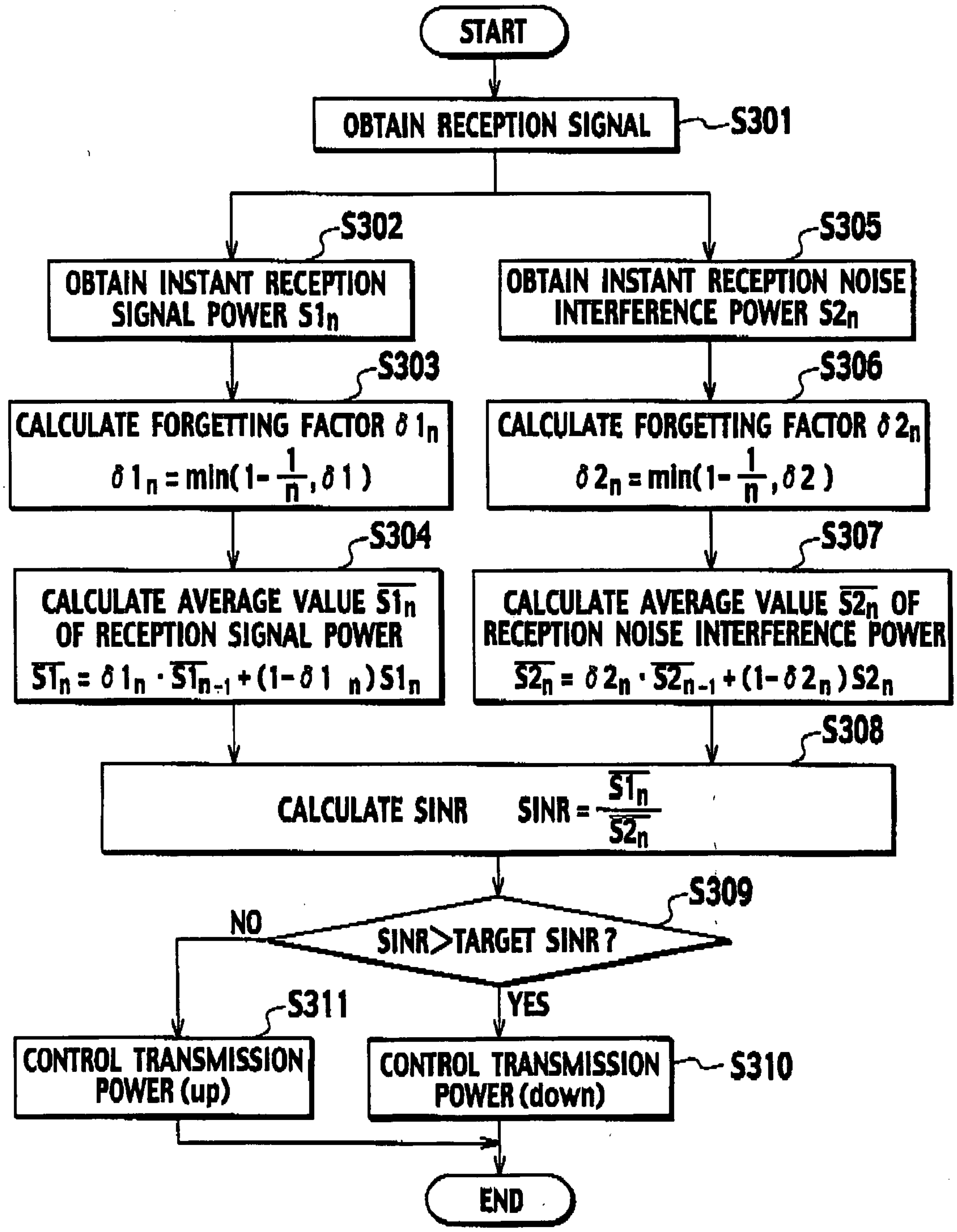
START
OBTAIN RECEPTION SIGNAL
S301
S302
OBTAIN INSTANT RECEPTION SIGNAL POWER S1n
S305
OBTAIN INSTANT RECEPTION NOISE INTERFERENCE POWER S2n
S303
CALCULATE FORGETTING FACTOR δ1n
δ1n = min(1- 1/n, δ1)
S306
CALCULATE FORGETTING FACTOR δ2n
δ2n = min(1- 1/n, δ2)
S304
CALCULATE AVERAGE VALUE S1n OF RECEPTION SIGNAL POWER
S1n = δ1n · S1n-1 + (1-δ1 n) S1n
S307
CALCULATE AVERAGE VALUE S2n OF RECEPTION NOISE INTERFERENCE POWER
S2n = δ2n · S2n-1 + (1-δ2n) S2n
S308
CALCULATE SINR SINR = S1n / S2n
S309
SINR>TARGET SINR ?
NO
YES
S311
CONTROL TRANSMISSION POWER (up)
CONTROL TRANSMISSION POWER (down)
S310
END

European Patent Office

# EUROPEAN SEARCH REPORT

Application Number
EP 06 02 2308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 460 777 A2 (NTT DOCOMO INC [JP]) 22 September 2004 (2004-09-22)<br>* abstract *<br>* page 9, line 43 - page 10, line 15; figures 7,9 *<br>----- | 1-9 | INV.<br>H04B7/00<br>H04L12/56 |
| X | WO 01/20935 A (ERICSSON TELEFON AB L M [SE]) 22 March 2001 (2001-03-22)<br>* abstract *<br>* page 3, line 21 - line 24 *<br>* page 5, line 1 - line 20 *<br>* page 12, line 6 - page 13, line 2 *<br>----- | 1-9 | |
| A | US 6 353 642 B1 (ASAHARA TAKASHI [JP] ET AL) 5 March 2002 (2002-03-05)<br>* abstract *<br>* column 11, line 62 - column 12, line 49 *<br>----- | 1-9 | |

TECHNICAL FIELDS SEARCHED (IPC)

H04L
H04B

The present search report has been drawn up for all claims

| Place of search | Date of completion of the search | Examiner |
|---|---|---|
| Munich | 17 January 2007 | Lastoria, Gianluca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

**ANNEX TO THE EUROPEAN SEARCH REPORT ON EUROPEAN PATENT APPLICATION NO.** EP 06 02 2308

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2007

| Patent document cited in search report | Publication date | Patent family member(s) | Publication date |
|---|---|---|---|
| EP 1460777 A2 | 22-09-2004 | NONE | |
| WO 0120935 A | 22-03-2001 | AU 7567200 A | 17-04-2001 |
| | | CN 1391773 A | 15-01-2003 |
| | | EP 1212908 A1 | 12-06-2002 |
| | | SE 516225 C2 | 03-12-2001 |
| | | SE 9903364 A | 17-05-2001 |
| | | US 6778511 B1 | 17-08-2004 |
| US 6353642 B1 | 05-03-2002 | WO 0101590 A1 | 04-01-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP P2005310402 B